# EUROPEAN PATENT APPLICATION

(11) **EP 2 980 028 A1**
(43) Date of publication of application: **03.02.2016**
(21) Application number: 15178728.0
(22) Date of filing: 28.07.2015
(51) Int. Cl.: C02F 1/48

(54) **A LIQUID DISPENSER WITH INTERNAL HELICAL SCREW**

(30) Priority: 29.07.2014 CA 2858214
(71) Applicant: 0985438 B.C. Ltd., Burnaby, British Columbia V5C 6C6 (CA)
(72) Inventor: Udovicic, Nicholas, Burnaby, British Columbia V5C 6C6 (CA); Leone, Sylvain, Kelowna, British Columbia V4V 2K5 (CA)
(74) Representative: Lecomte & Partners

(57) **Abstract**

A liquid dispenser that revitalizes the liquid and restores the natural structure, health and vitality to the liquid by increasing and activating dissolved oxygen in the liquid. The liquid dispenser may have an elongated open-ended chamber body. The body may have a distal and proximal end with the proximal end configured to receive a stream of liquid and the distal end configured to expel the stream of liquid. A helical screw may be connected inside of the elongated chamber body. The helical screw may be configured to transport the stream of water from the proximal end to the distal end of the chamber.

## Description

### COPYRIGHT NOTICE

This patent document contains material which is subject to copyright protection. The copyright owner has no objection to the facsimile reproduction by anyone of this patent document as it appears in the Patent and Trademark Office patent file or records, but otherwise reserves all copyright rights whatsoever.

### FIELD OF THE INVENTION

The invention relates to the field of liquid conduits and in particular to a liquid dispenser having an internal helical screw.

### BACKGROUND OF THE INVENTION

Water nozzles have been in existence for some time. Typically, these nozzles are attached to an end of a hose and a trigger is employed that allows water to travel from the hose out to an exit of a water gun nozzle.

Various theories exist regarding the efficacies of utilizing a vortex to revitalize water. According to these theories, the absorption of revitalized water provides one's body with energy and improves one's overall digestive system; hence, resulting in better elimination of bodily waste. It is also theorized that revitalized water efficiently transports nutrients to the body's cells and transports waste products and toxins out of the cells.

Theories also abound regarding the use of magnets in improving the overall efficacy of water. These theories espouse the notion that by passing water through a magnetic density field, the molecules in the water, begin to sort themselves, or self organize, in the field of the magnets. It is believed that this structuring of the molecules makes the water more bioavailable for consumption.

Accordingly, it would be highly desirable to provide a liquid dispenser that revitalizes liquid and restores the natural structure, health and vitality to the liquid by increasing and activating dissolved oxygen in the liquid through the use of a vortex and magnets.

### SUMMARY OF THE INVENTION

According to the present invention there is provided a liquid dispenser that revitalizes the liquid and restores the natural structure, health and vitality to the liquid by increasing and activating dissolved oxygen in the liquid. The liquid dispenser may have an elongated open-ended chamber body. The chamber body may have a distal and proximal end with the proximal end configured to receive a stream of liquid and the distal end configured to expel the stream of liquid. A helical screw may be connected inside of the elongated chamber body. The helical screw may be configured to transport the stream of water from the proximal end through to the distal end of the chamber body.

The liquid dispenser may also include a magnet connected inside of the elongated chamber body adjacent the helical screw. The magnet may also be connected adjacent to the proximal end of the chamber body.

Activation means connected to the chamber body may also be included. In a first position, the activation means may inhibit the stream of liquid from flowing through the chamber body. In a second position, the activation means may allow the stream of liquid to flow through the chamber body. More specifically, the activation means may include a lever pivotably connected to the chamber body. A flow engagement device may be in mechanical communication with the lever and oriented in the chamber body to inhibit the stream of liquid from flowing through the chamber body in the first position. Additionally, the activation means may include a biaser to bias the flow engagement device into the first position.

The liquid dispenser may also include retention means connected to the chamber body for retaining the activation means in the second position. The retention means may be a ring connected to the chamber body that is configured to slide over the lever.

Other aspects of the invention will be appreciated by reference to the detailed description of the preferred embodiment and to the claims that follow.

### BRIEF DESCRIPTION OF THE DRAWINGS

The preferred embodiment of the invention will be described by reference to the drawings thereof in which:
Fig. 1 is a perspective view of a liquid dispenser of the present invention in a first closed position;
Fig. 2 is a perspective view of the liquid dispenser of the present invention in a second open position;
Fig. 3 is a cutaway view along line 1-1 of Fig.1;
Fig. 4 is a cutaway view along line 2-2 of Fig. 2;
Fig. 5 is an exploded cutaway view along line 1-1 of Fig. 1;
Fig. 6 is the liquid dispenser of Fig. 4 showing a liquid flow path in the first closed position; and
Fig. 7 is the liquid dispenser of Fig. 5 showing a liquid flow path in the second open position.

### DESCRIPTION OF THE PREFERRED EMBODIMENT OF THE INVENTION

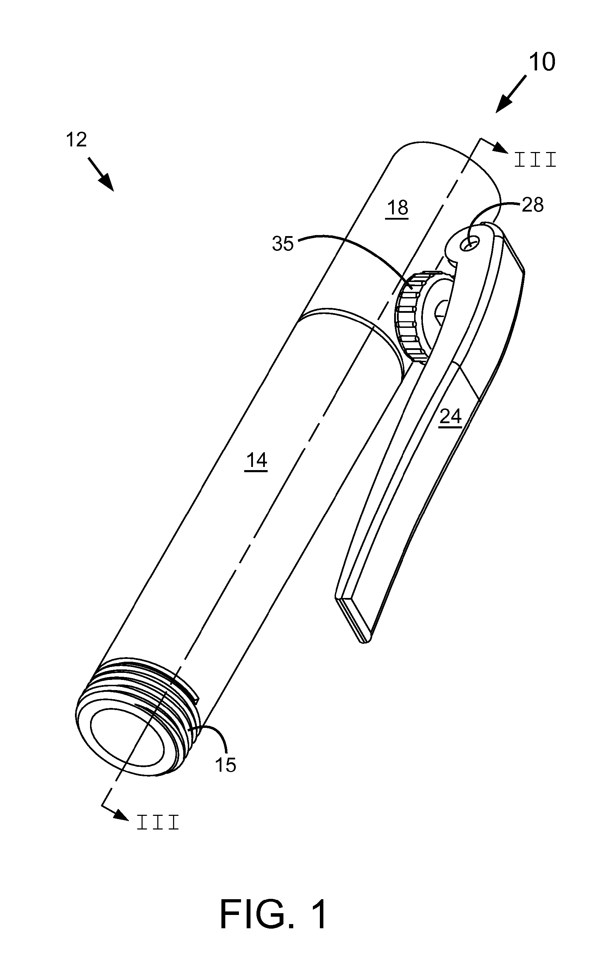

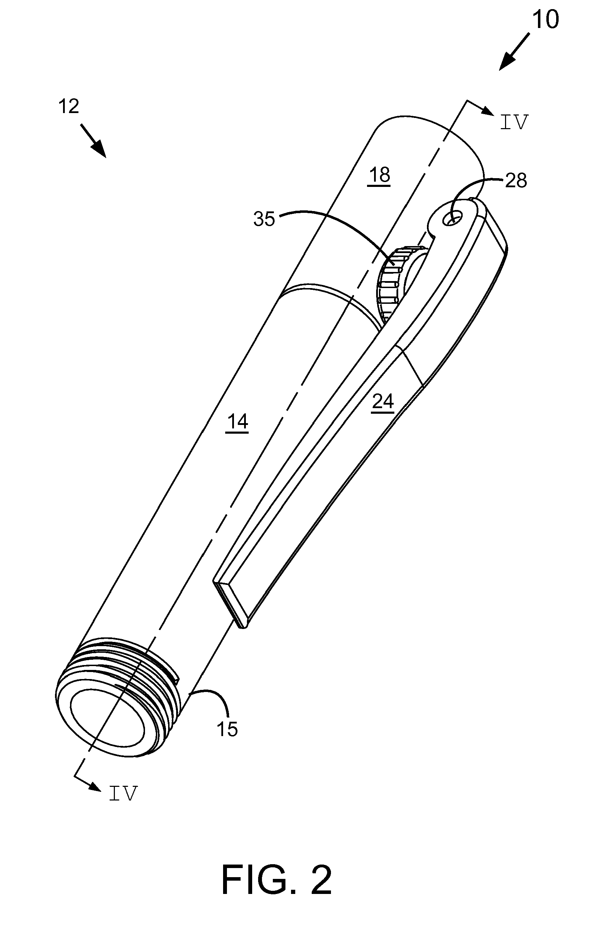

Referring to Figs. 1 and 2, there is provided a liquid dispenser **10.** Liquid dispenser **10** is operable in two positions: a first closed position, as illustrated by Fig. 1 and a second open position, as illustrated by Fig. 2.

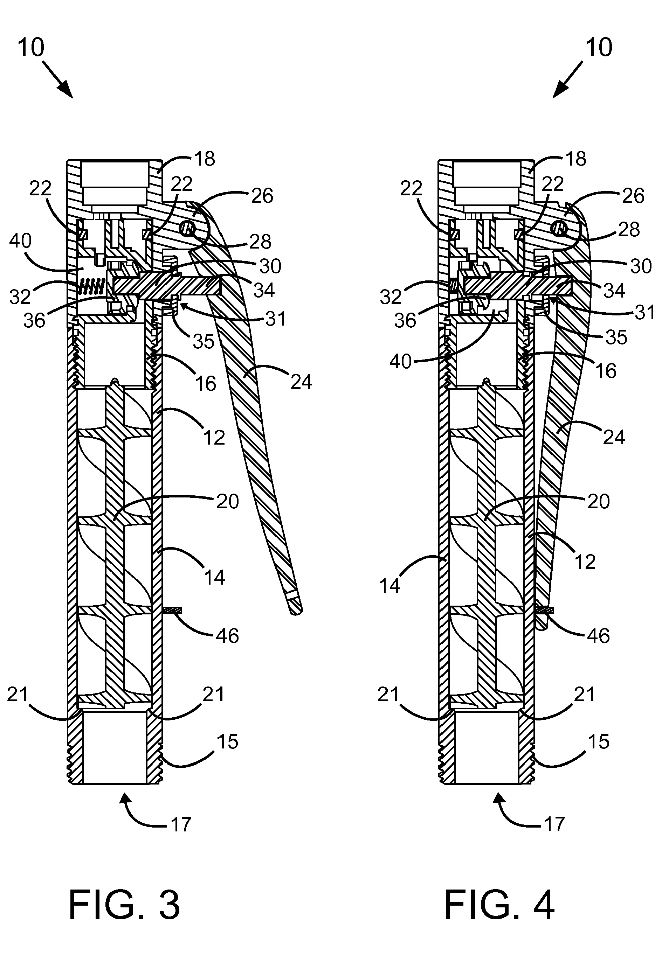

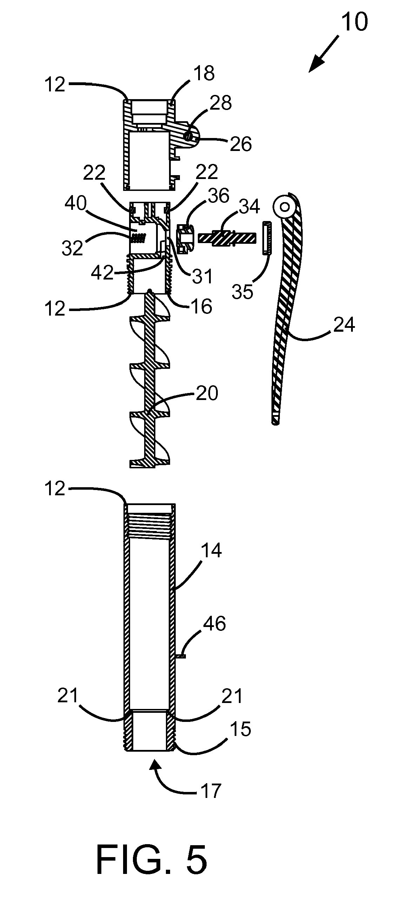

Referring to Figs. 3, 4 and 5, liquid dispenser **10** has an elongated open-ended chamber body **12.** As those skilled in the art will appreciate, chamber body **12** may be a singular body, but in the preferred embodiment is constructed with a barrel body **14,** a manifold body **16** and a rear fitting body **18,** each of which are configured to attach to one another to create a fluidic seal. Chamber body **12** has a distal end represented by rear fitting body **18** and a proximal end represented by barrel body **14.** Rear fitting body **18** is configured to receive a stream of liquid, for example, from a hose (not depicted) and barrel body **14** is configured to expel the stream of liquid through an exit **17.** Barrel body **14** may include means, such as threads **15** to attach an attachment, such as a garden wand (not depicted) to its exit **17.**

A helical screw **20** is provided which is connected to the inside of chamber body **12.** Helical screw **20** is configured to transport the stream of water from rear fitting body **18** through barrel body **14** and out exit **17.** In the preferred embodiment, helical screw **20** is permanently connected at one end to manifold body **16** through conventional techniques. In constructing chamber body **12,** helical screw **20** is merely inserted into barrel body **14** and its free end then abuts an internal shoulder **21** inside of barrel body **14.** Shoulder **21** is configured to lock the free end of helical screw **20** so that the helical screw is further prevented from rotating within barrel body **14.** In the preferred embodiment, helical screw **20** is a two start thread with a pitch of 1" and a lead of 2". The small minor diameter creates a thread depth of approximately 3/8", which allows ample flow of water through helical screw **20** as the liquid enters from manifold chamber exit **42.**

Liquid dispenser **10** also includes magnets **22** connected inside of chamber body **12** and in particular, manifold body **16.** Magnets are seated opposite each other in manifold body **16** in two small recesses (not illustrated). and are locked in place when rear fitting body **18** is placed over the manifold body.

To control the flow of liquid through liquid dispenser **10,** activation means connected to chamber body **12** is also included. In particular, activation means includes a lever **24.** Lever **24** is conventionally pivotably connected to chamber body **12,** and in the preferred embodiment, to pivot point **26** on rear fitting body **18** via a pin **28.** A flow engagement device or piston **30** is oriented in chamber **12,** and in the preferred embodiment, inside manifold body **16** to be in mechanical communication with lever **24** through top hole **31** in manifold body **16.** A biaser **32,** such as a coil spring, is provided inside manifold body **16** to bias piston **30** into the first closed position. Piston **30** includes a piston shaft **34** and piston head **36.** Piston shaft **34** is a smaller diameter than manifold chamber **40,** whereas piston head **36** may be substantially the same diameter as manifold chamber **40.**

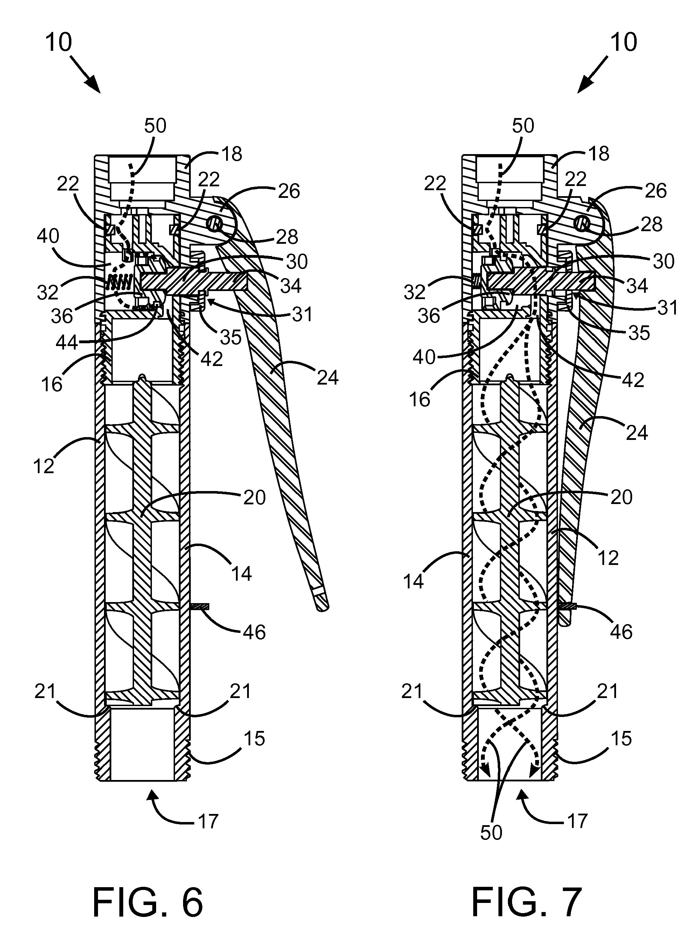

Referring to Fig. 6, in a first closed position, biaser **32** biases piston shaft **34** and piston head **36** upward to engage lever **24.** Piston head **36** in manifold chamber **40** effectively cuts off manifold chamber exit **42** from manifold body **16** through to barrel body **14.** In this position, liquid stream **50** merely swirls around manifold chamber **40** and is prevented from exiting manifold body **16.** In a preferred embodiment, piston head **36** includes an o-ring **44** to create an effective watertight seal between manifold body **16,** manifold chamber exit **42** and barrel body **14.** Referring to Fig. 7, when lever **24** is depressed into the second open position, the lever pushes down onto piston shaft **30** and piston head **36** which, in turn, pushes down onto biaser **32.** Here, piston head **36** in manifold chamber **40** no longer cuts off manifold chamber exit **42** from manifold body **16** through to barrel body **14.** In this position, liquid stream **50** is allowed to exit from manifold body **16** through manifold chamber exit **42,** into barrel body **14** with into contact with helical screw **20** and out exit **17.** In the open position, liquid stream passes into rear fitting body **18,** across magnets **22** and into manifold body **16** where it then exits through manifold chamber exit **42.** Upon exiting manifold body **16,** liquid stream **50** rides across helical screw **20** and exits barrel body **16** through exit **17.** Through contact with magnets **22** and helical screw **20,** liquid **50** is revitalized and restored to its natural structure and the health and vitality of the liquid is increased as the magnets and helical screw have activated the dissolved oxygen in the liquid.

To hold lever **24** down and in the open position, liquid dispenser **10** may also include retention means connected to chamber **12** for retaining the activation means in the second position. Retention means may be a ring **46** connected to chamber **12** configured to slide over lever **24.**

To fine tune the amount of liquid flowing through dispenser **10,** a thumb wheel **35** threadedly connected to piston shaft **34** may also be provided. Thumb wheel **35** would be connected to piston shaft **34** on the outside of manifold body **16.** By rotating thumb wheel **35,** a user can minimally adjust the travel of piston **30** and consequently, the amount of liquid being dispensed.

While embodiments of the invention have been described and illustrated, such embodiments should be considered illustrative of the invention only. The invention may include variants not described or illustrated herein in detail. Thus, the embodiments described and illustrated herein should not be considered to limit the invention as construed in accordance with the accompanying claims.

## Claims

1. A liquid dispenser comprising:
an elongated open-ended chamber body having a distal and proximal end, said proximal end configured to receive a stream of liquid and said distal end configured to expel said stream of liquid; and
a helical screw connected inside said elongated chamber body, said screw configured to transport said stream of liquid from said proximal end through to said distal end of said chamber body.

2. The liquid dispenser of claim 1 further comprising a magnets connected inside of said elongated chamber body and adjacent to said helical screw.

3. The liquid dispenser of claim 2 wherein said magnets is also connected adjacent to said proximal end of said chamber body.

4. The liquid dispenser of claim 1 further comprising activation means connected to said chamber body to inhibit said stream of liquid from flowing through said chamber body in a first position and to allow said stream of liquid to flow through said chamber body in a second position.

5. The liquid dispenser of claim 4 wherein said activation means comprises:
a lever pivotably connected to said chamber body;
a flow engagement device in mechanical communication with said lever and oriented in said chamber body to inhibit said stream of liquid from flowing inside said chamber body in said first position; and
a biaser to bias said flow engagement device into said first position.

6. The liquid dispenser of claim 5 further comprising retention means connected to said chamber body for retaining said activation means in said second position.

7. The liquid dispenser of claim 6 wherein said retention means comprises a ring connected to said chamber body and configured to slide over said lever.
